Europäisches Patentamt

(19) European Patent Office

Office européen des brevets

(11) Publication number: **0 161 093**
**B1**

(12) EUROPEAN PATENT SPECIFICATION

(45) Date of publication of patent specification: **14.03.90**

(51) Int. Cl.⁵: **G 03 B 42/02**

(21) Application number: **85302965.0**

(22) Date of filing: **26.04.85**

(54) Radiographic apparatus.

(30) Priority: **28.04.84 JP 87008/84**
**14.05.84 JP 97955/84**

(43) Date of publication of application:
**13.11.85 Bulletin 85/46**

(45) Publication of the grant of the patent:
**14.03.90 Bulletin 90/11**

(84) Designated Contracting States:
**DE FR GB NL**

(56) References cited:
**EP-A-0 077 676**
**US-A-3 916 206**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Fujiwara, Shigemi c/o Patent Division**
**Toshiba Corporation Principal Office**
**1-1 Shibaura 1-chome Minato-ku Tokyo (JP)**
Inventor: **Koyama, Katsuhide c/o Patent Division**
**Toshiba Corporation Principal Office**
**1-1 Shibaura 1-chome Minato-ku Tokyo (JP)**
Inventor: **Kageyama, Hiroshi c/o Patent Division**
**Toshiba Corporation Principal Office**
**1-1 Shibaura 1-chome Minato-ku Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to radiographic apparatus which employs stimulable phosphor sheets.

When certain kinds of phosphors are exposed to radiation, such as X-rays, α-rays, β-rays, γ-rays, or ultraviolet rays, they store a part of the energy of the radiation. Then, when the phosphor which has been exposed to the radiation is exposed to a stimulating ray, such as visible ray, light is emitted from the phosphor in the pattern of the stored energy of the radiation. A phosphor exhibiting such properties is referred to as a stimulable phosphor.

Radiographic apparatus adapted especially for using stimulable phosphors is described in U.S. Patent No. 4236078, entitled "Method and Apparatus for Recording and Reproducing a Radiation Image". This patent discloses a method and apparatus of radiation image recording and reproducing which employs a radiation image storage panel including a stimulable phosphor for medical diagnosis. The stimulable phosphor is first exposed to radiation to have a radiation image stored therein and is then scanned with a stimulating ray which causes it to emit light in the pattern of the stored image. The light emitted from the stimulable phosphor upon stimulation thereof is photoelectrically detected and converted to an electric signal which is processed as desired to reproduce a visible image of a quality suitable for viewing and diagnostic purposes.

In the radiation image recording and reproducing method described above, the final visible image may be reproduced in the form of a hard copy or may be displayed on a cathode ray tube. The stimulable phosphor sheet used in this method may take various forms, such as a panel, a drum, or the like, which are herein generally referred to as imaging plate (IP). For reasons of economy, it is desirable that the IP be used repeatedly in many separate radiographic operations, say, 1,000 operations.

Two problems have been posed in re-using the stimulable phosphor sheets in the course of radiation image recording and reproducing systems and processes as described above.

One problem encountered in repeatedly re-using the stimulable phosphor sheet has been that a part of the previously stored radiation image remains stored in the stimulable phosphor sheet after use and it causes a noise to occur in the visible image reproduced from the stimulable phosphor sheet when it is re-used. Theoretically, the radiation energy of the radiation image stored in the stimulable phosphor sheet should disappear when the sheet is scanned with a stimulating ray of a sufficient intensity to release sequentially the radiation energy stored as light emission. However, in practice, the stored radiation energy cannot be completely eliminated simply by scanning by the stimulating ray. Therefore, a first erasing, in which the radiation image previously stored in the stimulable phosphor is erased at high illumination for a long period of time by use of a large-scale device, can be carried out before the stimulable phosphor sheet is used in radiography.

Another problem has been that a stimulable phosphor contains traces of radioactive isotopes, such as $^{226}$Ra and $^{40}$K, which emit radiation and cause the stimulable phosphor sheet to store the emitted radiation energy even when the sheet is not being used in radiography. These traces of radioactive isotopes also constitute a cause of the noise developing in the reproduced visible radiation image. Further, a stimulable phosphor sheet is also affected by environmental radiation, such as cosmic rays and X-rays emitted from other X-ray sources and it stores the energy thereof. These types of radiation energy also cause noise to appear in the visible radiation image reproduced therefrom. In order to erase this stored radiation energy arising due to such extraneous sources, a second erasing by a small scale erasing device can be conducted over a short period of time immediately before the phosphor sheet is re-used.

Generally, it requires several seconds for the second erasing device to erase the indesirable radiation energy stored in a stimulable phosphor sheet which is emitted from the radioactive isotopes contained in a stimulable phosphor, cosmic rays or other X-ray sources, immediately before the next radiograph being taken on the stimulable phosphor sheet.

Further, it is impossible to take accurate radiographs timely on the stimulable phosphor sheet due to the intermittent feed of the subsequent sheets and interval therebetween.

European Patent Application EP—A 77676 discloses a radiographic apparatus for recording an image onto a stimulable phosphor sheet.

An object of the present invention is to provide an improved serial radiographic apparatus having an improved transport system for providing reliable transportation of the stimulable phosphor sheets.

According to the present invention, radiographic apparatus comprises a supply magazine adapted to contain a stack of stimulable phosphor sheets; transport means for transporting stimulable phosphor sheets serially from the supply magazine to an exposure position and then to a receiving magazine;

said transport means including two independent transport portions, which together form a continuous transport channel, the first of the portions transporting phosphor sheets from the supply magazine to an intermediate position towards the exposure position and the second transport portion transporting the sheets from the intermediate position to the receiving magazine by way of the exposure position.

In order that the invention may be more readily understood, it will now be described, by way of example only, with reference to the accompanying drawings, in which:—

Figure 1 is a schematic diagram of a radiographic system;

Figure 2 is a diagrammatic side view of a spot shot apparatus for stimulable phosphor sheets;

Figure 3 is a partial view showing a shot carriage and the guide arrangement employed in the apparatus shown in Figure 2;

Figure 4 is a schematic diagram of the control system for the apparatus;

Figure 5 is a partial perspective view showing the relationship of the carrying rollers and the phosphor sheet in the transport and drive system shown in Figure 2;

Figure 6a and 6b are a simplified side view and a cross-sectional view, respectively, of a light-tight mechanism provided in the transport and drive system;

Figure 7 is a cross-sectional view of a portion of the transport and drive system shown in Figure 2;

Figure 8 is a partial perspective view of a belt loop arrangement for transporting stimulable phosphor sheets and used in the transport and drive system.

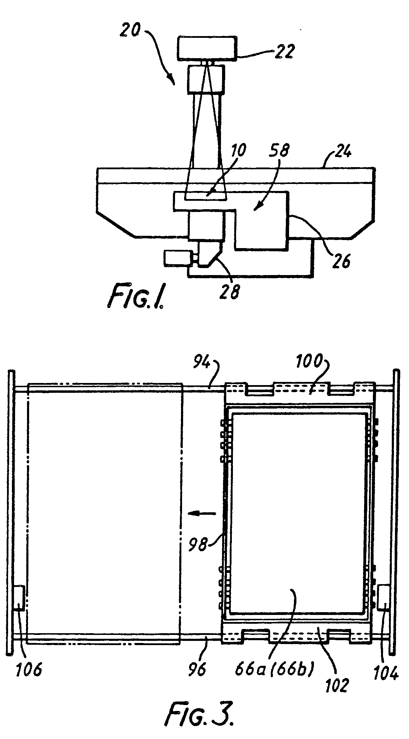

Referring now to the drawings, wherein like reference numerals designate identical or corresponding parts throughout the several views, and more particularly to Figure 1 thereof, the general arrangement of a serial radiographic system 20 constructed in accordance with the present invention includes an X-ray tube 22 which directs an X-ray beam towards a patient (not shown) disposed on the patient table 24, a spot shot apparatus 26 including a transport and drive system for receiving X-rays from the tube 22, which is positioned under the table 24, and an image intensification tube 28 coupled to a display apparatus (not shown) for providing a fluoroscopic image of the patient. Because the image tube 28 underlies the exposure station 10 in the spot shot apparatus 26 for taking radiographs on the stimulable sheets, it is able to provide unobstructed fluoroscopy without interfering with the radiographic procedure.

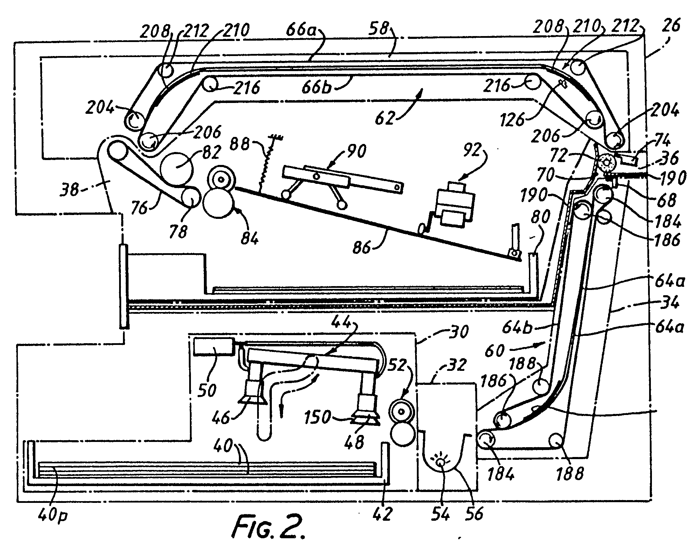

Referring now to Fig. 2, the spot shot apparatus 26 is seen to include a supply system 30 for unexposed stimulable phosphor sheets 40, a second noise erasing apparatus 32, a transport system 34, a light-tight mechanism 36, and a receiving system 38 for exposed stimulable phosphor sheets 40 transported by the transport system 34.

The supply system 30 includes a supply magazine 42 to be removed from the supply system 30 to enable convenient loading of unexposed stimulable phosphor sheets 40 (hereinafter referred to as IPs) in a darkroom, an IP feed mechanism 44 including take-up arms 46, 48 for taking-up the IPs one by one from the supply magazine 42 by suction of a vacuum pump 50, and carrying rollers 52 for forwarding an exposed IP 40 to the transport channel of the transport system 34. The IPs 40 are suction lifted and taken-up one at a time by the take-up arms 46, 48, which apply suction to the side of the IP opposite the phosphor layer side of IP 40. The taken-up sheet 40 is moved to the transport system 34 by the carrying rollers 52.

The second noise erasing apparatus 32 (hereinafter referred to as the erasing apparatus) includes a lamp 54, for example, a tungsten filament, fluorescent, sodium, xenon or iodine lamp, and a reflector 56 shaped and disposed so that IP 40 is exposed uniformly and widely by the light of the lamp 54. Thereby, the efficiency of exposure to light of the lamp 54 for IP 40 is increased. The erasing apparatus 32 is synchronized with the movement of IP 40 so that it emits light when the forward end of the taken-up IP 40 reaches the carrying rollers 52. The IP 40 is exposed to light when it is passed over the erasing apparatus 32 at a predetermined speed by the carrying rollers 52.

A transport system 34 is provided in spot shot apparatus 26. During an operating cycle the transport system 34 concurrently transports an unexposed IP 40 from the supply magazine 42 to a preexposure station 58 close to the exposure station 10 in part defined by the X-ray tube 22, and an exposed IP 40 from the preexposure station 58 to the receiving system 38. The transport system 34 has two continuous band portions 60, 62. One portion 60 transports the IP 40 from the carrying roller 52 to the light-tight portion 36; the other 62 transports the IP 40 from the light-tight portion 36 through the exposure station 58 to the receiving system 38. The portions 60, 62 each include respective pairs of continuous band loops 64a, 64b, and 66a, 66b, which run around roller wheels in a path. The IP 40 is transported in the transport channel defined by these band loops (64a, 64b), (66a, 66b) while being held between two facing band loops (64a, 64b) or (66a, 66b). The IP 40 is transported by the transport system 34 and stopped at the position where the IP 40 contacts the position detector 68 disposed in the forward end thereof. The IP 40 stays at this position during a predetermined period without being transported to the second portion 62 of the transport system 34.

The light-tight mechanism 36 includes a guide plate 70 for the IP 40, a light-tight roller 72 for forwarding the IP 40 with the guide 70, and a defect detector implemented 74 by suitable means. These components are arranged to prevent light from the erasing lamp 54 entering into the darkroom.

The second portion 62 of the transport system 34 includes a top band loop 66a and a bottom band loop 66b which can be moved in the direction perpendicular to the path of the band loops 66a, 66b. Thus, an unexposed IP 40 is moved by the loops 66a, 66b to a preexposure or park position, and then the entire assembly of the loops 66a, 66b with the unexposed IP is moved laterally to a station 10 shown in Fig. 1 where the X-ray beam from the source 22 passes through an adjacent patient. Movement of the IP 40 into the exposure station 10 is carried out after the IP 40 is advanced to a precise position on the band loops 66a, 66b, for example, a central portion of the second transport portion 62. If a defective IP 40 is detected by the defect detector 74, it will be transported directly to the receiving system 38 without being moved into the exposure station 10.

The receiving system 38 includes a drive belt 76 riding in the belt pulleys 78 for feeding and depositing the exposed IP 40 in the receiving magazine 80. A combination of a follower roll 82 and an ejector roll 84 are provided for gripping the exposed IP 40 and feeding it into the receiving magazine 80. The receiving magazine 80 for receiving the exposed IP 40 is mounted on tracks (not shown) to facilitate removal to a darkroom for loading and unloading of the exposed IP 40. A spring-biased press pad 86 is arranged downstream in the feeding path behind the ejector rolls 84. This press pad 86 is pivotable about an axis at one end of the pad 66 and is urged by spring 88 perpendicular to the direction of the IP feeding. A suitable pressure mechanism 90 pushes against the press pad 86 to load the exposed IPs 40 uniformly in the receiving magazine 80. A barcode reader 92 is provided for reading the identification of IP 40 and providing electrical signals corresponding thereto.

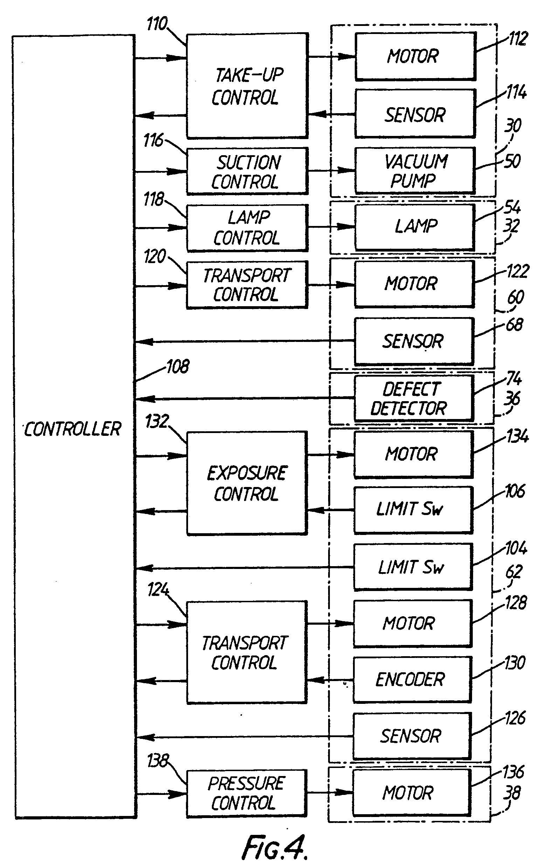

As shown in Fig. 3, the band loops 66a, 66b with the unexposed IP 40 are moved to an exposure position 10 under the X-ray source 22 from the parked position (preexposure station 58) along parallel guide rods 94, 96. The band loops 66a, 66b are supported by a carriage 98 having slide portions 100, 102 which slide on the guide rods 94, 96. Position detectors 104, 106 are disposed for detecting the movement of the carriage 98 in the path from the parked position 58 to the exposure position 10.

In operation, a supply magazine 42 which had previously been loaded in a darkroom with a plurality of the IPs 40 is inserted in the housing of the spot shot apparatus 26. An empty receiving magazine 80 is also inserted into the housing structure. The controller is programmed for the beginning of a feed cycle which feeds the selected IP 40 along the transport channel from the supply magazine 42 through the exposure station 10 to the receiving magazine 80.

Referring to the schematic diagram of the control system which controls the feed cycle shown in Fig. 4, to initiate a feed cycle, the take-up control mechanism 110 is actuated causing the transport system 34 to initiate feeding. The take-up arms 46, 48 operate to take-up the uppermost IP 40 in the supply magazine 42 and forward it to the carrying rollers 52 under control of the take-up control mechanism 110 for driving a reversible motor 112 responsive to the output signal of a position sensor 114 monitoring the positions of the arms 46, 48. A suction control mechanism 116 controls the actuation of the vacuum pump 50. A lamp control mechanism 118 conditions the light beam from the lamp 54 in the erasing apparatus 32. The taken-up IP 40 is fed past the erasing apparatus 32 to the transport system 34 from the carrying rollers 52. A transport control mechanism 120 conditions the actuation of motor 122 synchronized with the drive of the carrying rollers 52 responsive to the output signal of a position sensor 68 which monitors the arrival of the IP 40 at the forward end of the first band portion 60 within the transport system 34. After a predetermined time period, the motor 122 supplies a high speed drive to advance the IP 40 to the second band portion 62 within the transport system 34. The second transport control mechanism 124 for the pair of continuous band loops 66a, 66b in the portion 62 of the transport system 34 conditions the actuation of motor 128 to position the IP 40 in the predetermined preexposure position 58 in the path responsive to both the output signal of the position sensor 126 and the output signal of the rotary encoder 130. The position sensor 126 is disposed in the feed path for monitoring the arrival of the IP 40 at the front end of the second band loops 66a, 66b. The rotary encoder 130 monitors the rotational position of the shaft of motor 128. After that, the carriage 98 supporting the second band loops 66a, 66b is moved horizontally to the exposure station 10 to take a radiograph, and returned to the preexposure station 58. This motion of the carriage 98 is monitored by the limit switch 104 providing an output signal whenever the carriage 98 moves to the preexposure station 58. The second transport control mechanism 124 also drives a motor 128 to forward any IP 40 which is found to be defective by the detector 74 to the receiving system 38 without being advanced to the exposure station 10. Under control of an exposure control mechanism 132, the carriage 98 holding the second band loops 66a, 66b is moved from the parked position 58 to the exposure position 10 by motor 134. This motion of the carriage 98 is synchronized with the timing of the exposure of X-ray source 22 operated by an operator. The X-rays from the X-ray source 22 are directed to the patient after the carriage 98 is found to arrive at the exposure position by the limit switch 106, as shown in Fig. 3.

After the radiograph has been taken on the IP 40, the exposed IP 40 is transported to the receiving system 38 under control of the second transport control mechanism 124. The IP 40 transported from the second band loops 66a, 66b is further fed to the receiving magazine 80 by the drive belt 76 and drive rolls 84. In the receiving system 38, a pressure control mechanism 138 controls a reversible motor 136 for driving the pressure mechanism 90 which supplies the pivotable motion to the press pad 86. The pressure control mechanism 138 controls the movement nipping drive rolls 84 to allow the smooth rotation of the press pad 86 without contacting with each other, and controls the scanning of the bar code reader system 92.

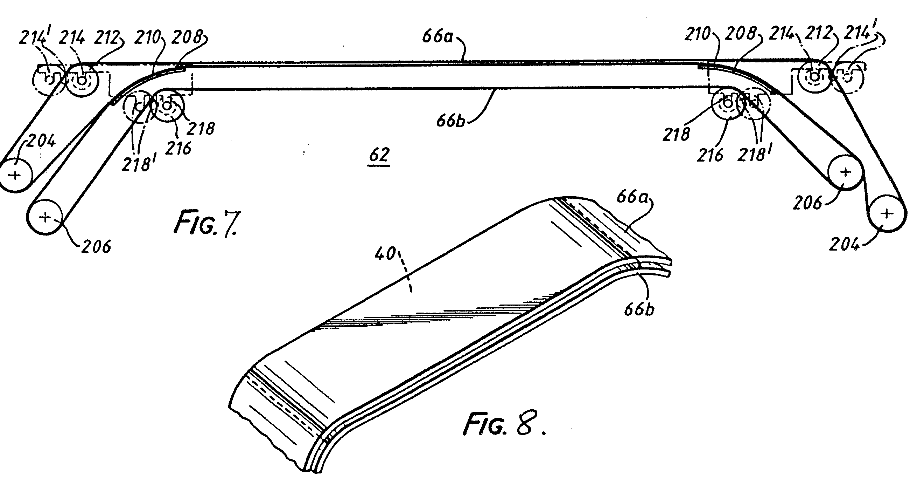

The supply system 30 is shown in detail in Figs. 2, and 7. The supply magazine 42 includes a housing having a floor, sides, a front and a back. A stack of IPs 40 is stored in the supply magazine 42. Each IP 40 is loaded with the phosphor layer thereof facing the floor of the supply magazine 42. The IP feed mechanism 44 is arranged above the supply magazine 42 to take out an unexposed IP 40 from the supply magazine 42, and forwardly transfer the unexposed IP 40 to the carrying rollers 52.

When the drawn IP 40 touches the nipping rolls 174 and 176, the IP 40 strikes between the drive rolls 174 and the follower rolls 176 and is fed to the transport system 34, as shown in Fig. 5. The surface of the substrate of IP 40 is sucked by the vacuum suction devices, and pressed by the drive rolls 174 to be transported, whereby there is no possibility of damage to the fluorescent layer of IP 40 caused by frictional contact of the fluorescent layer. It is to be noted that the fluorescent layer, which faces downward as shown in Fig. 5, makes contact with the follower rolls 176, thereby avoiding frictional slippage, and possible damage to the fluorescent layer of the IP. In addition, the corrugation roll 177 is between the drive rolls 174 in the carrying rolls unit 52 to corruage the IP 40 during its passage through the carrying rolls unit 52 again to avoid vertical bending of the IP, which would result in frictional dragging of the IP. Accordingly firmness of IP 40 over the complete area thereof is maintained so that the IP 40 is fed to pass over the erasing apparatus 32, and strike the transport system 34 without frictional contacting of the fluorescent layer of the IP.

The erasing apparatus 32 is disposed as shown in Fig. 2 to erase undesirable radiation energy stored in the IP 40 which causes noise to appear in the visible radiation image reproduced from a reused IP. The erasing apparatus 32 includes a lamp 54, a reflector 56 and power supplier (not shown) which is an AC source to supply power to maintain the power load of the lamp 54 constant using a feed-back control.

Referring to Figs. 2, 7 and 8, the transport system 32 has the first portion 60 for transporting the selected IP 40 from the carrying rolls unit 52 to the light-tight roll assembly 36 and the second portion 62 underlying the preexposure station 58 along a feed path from the light-tight roll assembly 36 to the receiving system 38. The first portion 60 of the transport system 34 includes a pair of endless drive bands 64a and 64b between which the IP 40 is held for transporting the IP 40 and which are arranged in close serial proximity. Each band portions 64a or 64b runs around respective paired drive roller drums 184 or 186. The entrance to the first band loops 64a and 64b includes a guide plate 188 to connect with the feed path over the erasing apparatus 32 from the carrying roll unit 52 and to bend the band portions 64a and 64b arcuately. The length of band loops 64a and 64b in a forward direction is substantially the same as that of IP 40. The position sensor 68 is provided at the forward end of band portions 64a and 64b. The drive roller drums 184 and 186 are braked for a predeterminable time responsive to the output signal from the position sensor 68 whenever the IP 40 has reached the forward end of the first band loops 64a and 64b. When the previous IP held in the carriage 98 is shifted from the exposure station to the park position, and the exposed IP is forwarded to the receiving system 38, the drive roller drums 184 and 186 then rotate again to drive the band loops 64a and 64b. A pair of follower drums 188 is provided to stretch the band loops 64a and 64b.

The IP 40 on which the erasing has been conducted is transported to enter between the band loops 64a and 64b and to be advanced in the curved transport channel formed by the band loops 64a and 64b until the IP 40 reaches the forward end thereof. When the position sensor 68 senses the leading or front edge of IP 40 to be transported, the IP 40 remains in the first band portion 60 for a predeterminable time by braking the movements of the band loops 64a and 64b responsive to the signal from the position sensor 68.

After the radiograph has been taken on the IP 40 previously transported to the second band portion 62, and the exposed IP 40 has been transported to the receiving system 38, the IP 40 in the first band portion 60 is advanced via the light-tight roller assembly 36 to the second band portion 62 for the next radiograph. The same operation is repeated for the subsequent new IP 40 which is fed from the carrying roll unit 52 passing over the erasing apparatus 32.

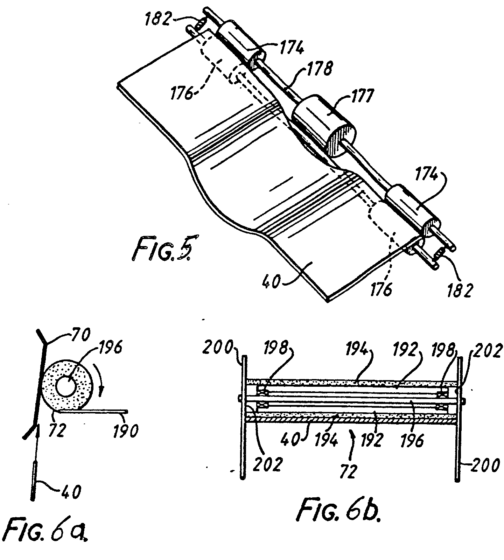

The light-tight mechanism 36 is shown in Figs. 2, 6a and 6b, and includes a guide plate 70, a light-tight roller 72 arranged adjacent the guide plate 72, and shutter plates 190 provided to maintain a light-tight environment surrounding the IPs 40 positioned outside the transport system 34. The light-tight roller includes a foam pad 194 having a coating such as made of urethone material on the outside surface of the roller 192 and is rotatably mounted on a shaft 196 via the paired bearings 194. The shaft 196 is mounted on a chassis 200 on which the anti-friction layer 202 is provided for preventing damage due to friction between the foam pad 194 and the chassis 200.

The IP 40 to be exposed is transported from the first band loops 64a and 64b to be grasped between the light-tight roller 72 and the guide plate 70, and the light-tight roller 72 rotates at a revolution rate corresponding to the transport speed of IP 40. The IP 40 is fed through the light-tight roller 72 to the second band loops 66a and 66b. The coating foam pad 194 deforms so as not to damage the phosphor layer of IP 40 as it passes through the light-tight roller 72. When the IP 40 passes between the light-tight roller 72 and the guide plate 70, the light-tight roller 72 rides on the phosphor layer of IP 40 and the substrate slips on the guide plate 70. The foam pad 194 acts as a cushion for the entering IP 40 to squeeze the IP 40 in connection with the guide plate 70, whereby the light-tight mechanism 36 protects the exposed IP 40 from the light of the erasing apparatus 32 during the transportation of the IP 40 through the light-tight roller 72.

The second portion 62 of the transport system 34 is shown in Figs. 2, 9 and 10 and includes a pair of endless drive bands 66a and 66b arranged in close proximity to transport the IP 40 by holding the IP 40 therebetween. Each band 64a or 64b runs around a respective one of paired drive roller drums 204 and 206. The entering and exiting portions of the band loops 66a and 66b are bent by arcuate guide plates 208 to continue the transport channel of the first band loops 64a and 64b and the feed path to the receiving magazine 80. The paired tension rollers 212 and 216 are provided for stretching the band loops 66a and 66b between the respective paired drive drums 204 and 206.

In Figs. 7 and 8, the upper band 66a is formed of an X-ray transparent material, such as urethane, the width of which is substantially the same as that of the IP 40 for enclosingly covering the complete area of the IP 40. The bottom band 66b is formed of four strips of narrow bands which are rotated by the driver roller drums 206 at the same speed.

The arc portions 210 of the band loops 66a and 66b are separated by a predetermined distance sufficiently long to position the complete area of the IP 40 therebetween, and are formed by disposing the guide plate 208 along the inside of the bottom band loops 66b. When the IP 40 is sandwiched between the band loops 66a and 66b in the park position 58, the forward edge and back edge of the IP 40 are positioned in the respective arc portions 210 to be grasped tightly.

The paired follow rollers 212 and 216 are arranged to ride on the respective band loops 66a and 66b, and are pivotably mounted on the shafts 214 and 218. Shafts 214 and 218 are shiftable in the forward direction of the band loops 66a and 66b to adjust the tension of the respective band loops 66a and 66b. The shift of the shaft 214 and 218 is achieved by any suitable means.

Referring now to Figs. 3 and 7, the drive drums 204 and 206 and the follower rollers 214 and 216 are pivotably mounted on the carriage 98 which includes the sliders 102 in the side portion thereof for shifting along the guide rods 94 and 96 from the parked position to the exposure station 10 shown in Fig. 1. A motor (not shown) supplies the lateral shift of the carriage 98 along the guide rods 94 and 96 under control of the exposure control mechanism 132.

The IP 40 is transported from the first band portion 60 to the second band portion 62 through the light-tight roller assembly 36 at high-speed, and is sandwiched between the upper band 66a and the bottom band 66b to be fed to the park position under control of the second transport control mechanism 124. During being transported through the arcuate guide plates 208, the IP 40 is turned so that the phosphor layer of the IP 40 faces towards the X-ray source 22. When the IP 40 is positioned precisely between the arc portions 210 (corresponding to the park position), the drive of the drive drums 204 and 206 is stopped responsive to the signal from the second control mechanism 124. The IP 40 is grasped in the arc portions 210 rigidly because the parts of bands 66a and 66b corresponding to the arc portions 210 are stretched especially tightly along the guide plates 208. After that, the carriage 98 supporting the second band portions 62 of the transport system 34, which holds the IP 40, is moved laterally to the exposure station 10 for taking of a radiograph on the IP 40. The movement of the carriage 98 is perpendicular to the feed path for the IP 40 in the transport system 34, and is supplied by the motor 134 under control of the exposure control mechanism 132. The motor 134 is actuated responsive to the signal generated at the time when the X-ray button (not shown) is pushed by an operator.

The control of positioning the IP 40 precisely in the park position of the second band loops 66a and 66b is achieved to condition the motor 128 responsive to the detection of the forward or back end of IP 40 being transported by the position sensor 126 and the output of the rotary encoder 130 for monitoring a rotational position of the output shaft of the motor 128. For example, the required drive pulses are supplied to the motor 128, which corresponds to the distance (which is known) between the position sensor 126 and the forward end of the second band loops 66a and 66b.

The controller 108 acts as a timer for the exposure control mechanism 132 for feeding the unexposed IP 40 to the receiving system 38 without advancing the IP 40 to the exposure station unless the X-ray button is pushed in the predetermined time, such as several seconds, after starting to count at the time when the erasing operation has been completed in the erasing apparatus 32. Thereby, an IP which develops undesirable radiation energy on its fluorescent layer during the time it remains in the first band portion 60 of the transport system 34 is not used for a radiograph.

After completion of exposure, the transport system 34 is activated to remove the IP 40 from the exposure and park position and to deposit it in the receiving magazine 80.

The feed mechanism for feeding the exposed IP 40 from the second portion 62 of the transport system 34 to the receiving magazine 80 through the ejector roller unit 84 includes a drive belt 76 riding in the belt pulleys 78 and a large diameter follower roll 82 which rides on the belt 76 to advance forward the exposed IP 40 by co-operating with the belt 76.

The IP 40 after passing through the feed mechanism in the form of a conveyor belt 76 is forwarded by an ejector roll unit 84 into the receiving magazine 80.

The system operates as follows.

The unexposed IP 40 is loaded in the supply magazine so that the side opposite to the fluorescent layer of the IP 40 faces upward. The vacuum suction devices 46 and 48 draw the uppermost IP 40 of the stack out of the magazine 42 one by one by suction applied to the side opposite to the fluorescent layer side of the IP 40. The drawn IP 40 passes over the erasing apparatus 32 to erase undesirable radiation energy stored in the IP 40 by emitting a light beam to the fluorescent layer of the IP 40. The IP 40 fed from the erasing apparatus 32 is advanced to strike the paired band loops 64a and 64b and turned upside down by being fed to the receiving system 38 through the second band portion 62 of the transport system 34. The exposed IP 40 is forwarded by the second band portion 62 of the transport system and turned downside up by passing through the end arc portion 210 defined by arcuate plate portion 208 in the transport channel. The exposed IP 40 is fed from the transport system 34 to the ejector roller unit 84 through the feeding mechanism including the drive belt 76 and the follower roller 82 whereby the side opposite to the fluorescent layer side of the IP 40 faces upward when passing through the ejector roll unit 84. The ejector roller unit 84 feeds the exposed IP 40 into the receiving magazine 80 and the IP 40 discharged from the roll unit 84 is pushed by the press pad 86 on the entire surface area thereof. Thereby the exposed IP 40 which is discharged by the ejector roller unit 84 is placed on the top of the stack of the exposed IPs 40 in such manner that the side opposite to the fluorescent layer of IP 40 faces upward in the receiving magazine 80.

When a predetermined number of exposed IPs 40 have been loaded in the receiving magazine 80, a shutter is inserted into the light-tight enclosure of the magazine 80 to maintain a light-tight environment surrounding the stack of the exposed IPs 40. The magazine 80 in which the light-tight environment is kept is removed from the housing structure of the spot shot apparatus 26 for processing the exposed IPs 40 to reproduce visible images from the radiation pattern stored on the fluorescent layer of the IPs 40 by impinging a ray thereagainst by suitable means.

## Claims

1. Radiographic apparatus comprising a supply magazine (42) adapted to contain a stack of stimulable phosphor sheets (40); transport means (34) for transporting these sheets (40) serially from the supply magazine (42) to an exposure position (10) and then to a receiving magazine (80); characterised in that said transport means (34) includes two independent transport portions (60, 62), which together form a continuous transport system, the first of the portions (60) transporting the sheets (40) from the supply magazine (42) to an intermediate position (36) towards the exposure position (10) and the second transport portion (62) transporting the sheets (40) from the intermediate position (36) to the receiving magazine (80) by way of the exposure position (10).

2. Radiographic apparatus as claimed in claim 1, characterised in that it includes a transport control means for the transport system to cause the unexposed sheet (40) to remain in the first transport portion (60) until the sheet (40) exposed to the radiation at the exposure station (10) is fed to the receiving magazine (80) by the second transport portion (62).

3. Radiographic apparatus as claimed in claim 1 or 2, characterised in that it includes a take-up and feeding means (44, 52) for taking up unexposed sheets (40) from the supply magazine (42) one by one and serially feeding said unexposed sheets (40) to the first transporting portion (60); and a discharging means (38) for discharging the exposed sheet (40) transported by said second transport portion (62) to dispose the exposed sheets (40) in the receiving magazine (10).

4. Radiographic apparatus as claimed in any preceding claim, characterised in that said first and second transport portions (60, 62), each comprise a feeding path having a length larger than a longitudinal dimension of the sheet (40) being fed.

5. Radiographic apparatus as claimed in claim 4, characterised in that said first and second transport portions (60, 62) each comprise endless paired band loops running around rolls, said sheets (40) being grasped between the paired band loops.

6. Radiographic apparatus as claimed in claim 5, characterised in that said second transport portion (62) comprises means (98) for moving the endless paired band loops of said second transport portion (62) laterally from a park position to said exposure position (10) after grasping of said sheets (40) therebetween, and from said exposure position (10) to said park position after exposure of said sheet (40).

7. Radiographic apparatus as claimed in claim 6, characterised in that said moving means (98) is responsive to an operator actuated control button.

## Patentansprüche

1. Radiografische Einrichtung, mit einem Versorgungsmagazin (42) zur Aufnahme eines Stapels von anregbaren Phosphorblättern (40); Transportmitteln (34) zum Transport dieser Blätter (40) aufeinanderfolgend von dem Versorgungsmagazin (42) zu einer Belichtungsposition (10) und dann zu einem Aufnahmemagazin (80); dadurch gekennzeichnet, daß die Transporteinrichtung (34) zwei unabhängige Transportteile (60, 61) aufweist, die zusammen ein kontinuierliches Transportsystem bilden, wobei der erste der Teile (60) die Blätter (40) von dem Versorgungsmagazin (42) zu einer Zwischenposition (36) in Richtung auf die Belichtungsposition (10) transportiert und der zweite Transportteil (62) die Blätter (40) von der Zwischenposition (36) zu dem Aufnahmemagazin (80) vermittels der Belichtungsposition (10).

2. Einrichtung nach Anspruch 1, gekennzeichnet durch eine Transportsteuereinrichtung für das Transportsystem, um die unbelichteten Blätter (40) zu veranlassen, in dem ersten Transportteil (60) zu bleiben, bis das Blatt (40), das in der Belichtungsstation (10) der Strahlung ausgesetzt ist, zu dem Aufnahmemagazin (80) durch den zweiten Transportteil (62) transportiert ist.

3. Einrichtung nach Anspruch 1 oder 2, gekennzeichnet durch Aufnahme- und Speisemittel (40, 52) zur Aufnahme unbelichteter Blätter (40) von dem Versorgungsmagazin (42) eines nach dem anderen und zum aufeinanderfolgenden Transportieren der genannten unbelichteten Blätter (40) zu dem ersten Transportteil (60), und durch eine Ausgabeeinrichtung (38) zur Ausgabe der belichteten Blätter (40), die von dem zweiten Transportteil (62) transportiert worden sind, um die belichteten Blätter (40) in dem Aufnahmemagazin (10) abzulegen.

4. Einrichtung nach einem der vorhergehenden Ansprüche, dadurch gekennzeichnet, daß die ersten und zweiten Transportteile (60, 62) jeweils einen Zuführpfad aufweisen, der eine Länge hat, die größer als eine Längsabmessung des zugeführten Blattes (40) ist.

5. Einrichtung nach Anspruch 4, dadurch gekennzeichnet, daß die ersten und zweiten Transportteile (60, 62) jeweils endlose, gepaarte Bänderschleifen aufweisen, die um Rollen laufen, wobei die Blätter (40) zwischen den gepaarten Bandschleifen gehalten sind.

6. Einrichtung nach Anspruch 5, dadurch gekennzeichnet, daß der genannte zweite Transportteil (62) Mittel (68) aufweist zum Bewegen der endlosen, gepaarten Bandschleifen des genannten zweiten Transportteils (62) seitlich aus einer Parkposition zu der Belichtungsposition (10) nach Ergreifen der genannten Blätter (40) dazwischen und von der genannten Belichtungsposition (10) zu der genannten Parkposition nach der Belichtung des genannten Blattes (40).

7. Einrichtung nach Anspruch 6, dadurch gekennzeichnet, daß die Bewegungsmittel (98) von einem durch eine Bedienungsperson betätigten Steuerknopf gesteuert sind.

**Revendications**

1. Appareil à rayons X qui comprend un magasin d'alimentation (42) adapté à contenir une pile de feuilles de phosphore stimulables (40); des moyens (34) pour transporter lesdites feuilles (40) en série du magasin d'alimentation (42) à une station d'exposition (10) et, de là, à un magasin de réception (80), caractérisé en ce que lesdits moyens de transport (34) comportent deux sections indépendantes (60, 62) qui forment ensemble un dispositif de transport continu, la première section (60) assurant le transport des feuilles (40) du magasin d'alimentation (42) à une position intermédiaire (36) vers la station d'exposition (10), tandis que la seconde section de transport (62) assure le transfert des feuilles (40) de la position intermédiaire (36) au magasin de réception (80), par la station d'exposition (10).

2. Appareil selon la revendication 1, caractérisé en ce qu'il comprend des moyens de commande pour le dispositif de transport qui font que la feuille (40) non exposée reste dans la première section (60) jusqu'à ce que, après avoir été exposée aux radiations dans la station d'exposition (10) soit transportée dans le magasin de réception (80) par la seconde section de transport (62).

3. Appareil selon la revendication 1 ou 2, caractérisé en ce qu'il comporte des moyens (44, 52) pour enlever les feuilles (40) non exposées, une à une, du magasin d'alimentation (42) et pour les transférer en série à la première section de transport (60); et des moyens (38) pour décharger la feuille (40) exposée, transportée par la seconde section de transport (62), de façon à déposer les feuilles (40) exposées dans le magasin de réception (10).

4. Appareil selon l'une quelconque des revendications précédentes, caractérisé en ce que lesdites première et seconde sections de transport (60, 62) comprennent, chacune, un trajet dont la longueur est supérieure à la dimension longitudinale de la feuille (40) transportée.

5. Appareil selon la revendication 4, caractérisé en ce que lesdites première et seconde sections de transport (60, 62) comprennent, chacune, des paires de boucles de bande sans fin passant autour de rouleaux, lesdites feuilles (40) étant saisies entre lesdites boucles de bandes appariées.

6. Appareil selon la revendication 5, caractérisé en ce que la seconde section de transport (62) comprend des moyens (98) pour déplacer les boucles de bandes sans fin appariées de ladite seconde section de transport (62) latéralement entre une position d'attente et ladite position d'exposition (10) après que lesdites feuilles ont été saisies entre elles, et de ladite position d'exposition (10) à ladite position d'attente après que ladite feuille (40) a été exposée.

7. Appareil selon la revendication 6, caractérisé en ce que lesdits moyens de déplacement (98) sont commandés par un bouton actionné par l'opérateur.

*20*  *22*

*10*  *58*  *24*

*26*

*28*

*Fig. 1.*

*94*  *100*

*98*

*106*  *96*  *66a (66b)*  *104*

*102*

*Fig. 3.*

1

Fig. 2.

Fig.4.

FIG.5.

FIG.6a.

FIG.6b.

FIG. 7.

FIG. 8.

EP 0 161 093 B1